Europäisches Patentamt

European Patent Office

Office européen des brevets

(11) Numéro de publication: **0 368 755 B1**

# (12) FASCICULE DE BREVET EUROPEEN

(45) Date de publication de fascicule du brevet: **23.03.94** (51) Int. Cl.⁵: $G01S\ 7/48$, G02F 2/00

(21) Numéro de dépôt: **89403080.8**

(22) Date de dépôt: **08.11.89**

(54) Dispositif de détection d'un signal optique cohérent.

<table>
<tr><td>

(30) Priorité: **09.11.88 FR 8814611**

(43) Date de publication de la demande:
**16.05.90 Bulletin 90/20**

(45) Mention de la délivrance du brevet:
**23.03.94 Bulletin 94/12**

(84) Etats contractants désignés:
**DE GB IT**

(56) Documents cités:
**EP-A- 0 040 114**
**EP-A- 0 040 116**
**FR-A- 2 561 377**
**US-A- 3 834 816**
**US-A- 4 515 471**

</td><td>

(73) Titulaire: **SAT (SOCIETE ANONYME DE TELE-COMMUNICATIONS) Société Anonyme française**
**41, rue Cantagrel**
**F-75631 Paris Cédex 13(FR)**

(72) Inventeur: **Ouhayoun, Michel Maurice**
**72 boulevard de la Vilette**
**F-75019 Paris(FR)**

(74) Mandataire: **Bloch, Gérard et al**
**2, square de l'Avenue du Bois**
**F-75116 Paris (FR)**

</td></tr>
</table>

Rank Xerox (UK) Business Services
(3.10/3.09/3.3.3)

## Description

La présente invention a pour objet un dispositif de détection d'un signal optique cohérent comprenant des moyens pour engendrer un signal optique auxiliaire, également cohérent, et des moyens pour faire battre le signal optique à détecter et le signal optique auxiliaire et détecter le battement, et donc le signal à détecter.

Un tel dispositif est utilisé, par exemple, dans les systèmes de télémétrie par laser, ou encore dans les systèmes d'imagerie active. Dans ces systèmes, le signal optique à détecter provient de la réflexion sur un objet, ou cible, d'un signal optique émis par un laser émetteur. Par exemple, et dans le cas de la télémétrie, le signal optique émis est impulsionnel, et la mesure de l'intervalle de temps qui sépare l'instant d'émission de l'instant de détection du signal réfléchi permet la détermination de la distance à laquelle se trouve la cible.

Le signal optique auxiliaire a une fréquence légèrement décalée par rapport à la fréquence du signal optique émis par le laser émetteur, par exemple de l'ordre de quelques dizaines de Mégahertz. Il est engendré par un laser qui joue donc le rôle d'oscillateur local, et ses caractéristiques d'amplitude et de fréquence sont invariables dans le temps. Le signal optique à détecter et le signal optique local sont appliqués, par exemple, à un détecteur quadratique qui fait battre ces deux signaux. Ce détecteur est suivi d'un circuit de filtrage centré sur la fréquence de battement, afin de permettre la détection du battement, et donc du signal à détecter. Un telle détection est appelée détection optique cohérente.

Dans un tel dispositif, la distance maximale à laquelle peut se trouver une cible détectable est évidemment liée à la valeur du signal le plus faible susceptible d'être détecté. En effet, comme cela est connu, plus la cible est lointaine, plus le signal reçu provenant de la réflexion, sur la cible, du signal émis est faible. En pratique, la limite inférieure du signal détectable est liée au rapport signal sur bruit du laser oscillateur local. Aussi, pour augmenter la valeur maximale de la distance mesurable, on peut songer à utiliser un amplificateur optique pour amplifier, avant battement, le signal à détecter.

Toutefois, les amplificateurs optiques classiques présentent eux-mêmes un rapport signal sur bruit tel que l'augmentation des performances de l'ensemble est peu significatif.

On connaît toutefois, par l'article de NAKAJIMA et al.,"Intracavity nearly degenerate four-wave mixing in a (GaAl)As semiconductor laser", Appl. Phys. Lett. 47(8), 15 October 1985, un dispositif susceptible d'amplifier notablement un signal optique sans dégrader notablement le rapport signal sur bruit. Ce dispositif met en oeuvre un mélange de quatre signaux optiques, mélange du type habituellement désigné par "mélange à quatre ondes", et qui a lieu ici dans une diode laser oscillant à la fréquence $f_1$. Ce dispositif procure non seulement, comme cela est connu, un changement de signe de la phase du signal optique qui lui est appliqué, mais aussi une amplification de ce signal. Ce dispositif amplificateur n'est cependant pas applicable dans le dispositif de détection cohérente dont il est question ici, dans la mesure où lorsque le signal à amplifier est de fréquence f, le signal amplifié est de fréquence $f_a$, avec :

$$f_a = 2f_1 - f$$

La fréquence $f_a$ du signal amplifié n'est donc égale à la fréquence f du signal à amplifier que si celle-ci est rigoureusement égale à la fréquence $f_1$ d'oscillation de la diode laser du dispositif amplificateur. Or une telle condition ne peut être réalisée en permanence dans le dispositif de détection cohérente dont il est question ici, compte-tenu des variations indépendantes que sont susceptibles de subir les deux fréquences en question.

Ainsi, la sensibilité des dispositifs connus de détection cohérente optique est donc limitée.

La présente invention vise à pallier, au moins en partie, les inconvénients précédents, en procurant un dispositif de détection cohérente du type défini ci- dessus, dont la sensibilité est notablement plus élevée que les dispositifs de l'art antérieur.

A cet effet, elle a pour objet un dispositif du type défini ci-dessus, caractérisé par le fait qu'il comprend un milieu solide non-linéaire, pompé par deux signaux optiques de directions opposées et issus du signal optique auxiliaire, et qui reçoit le signal optique à détecter pour l'amplifier avant battement.

Dans le dispositif de l'invention, un "mélange à quatre ondes" a lieu dans le milieu solide non linéaire, et il a pour conséquence une conjugaison de phase et une amplification peu bruyante du signal à détecter, comme dans le dispositif décrit dans l'article de NAKAJIMA et al. Cependant, du fait que le mélange n'a pas lieu dans une diode laser oscillant à sa propre fréquence $f_1$, mais dans le milieu solide non linéaire pompé à la fréquence $f_{ol}$ du signal optique local, la fréquence $f_a$ du signal amplifié vaut maintenant :

$$f_a = 2f_{ol} - f$$

Il en résulte que, lorque l'on fait battre le signal amplifié, de fréquence $f_a$, avec le signal local de fréquence $f_{ol}$, on obtient un battement à la fréquence $f_b$ égale à la différence des deux fréquences $f_a$ et $f_{ol}$, c'est à dire :

$$f_b = 2f_{ol} - f - f_{ol}$$

soit :

$$f_b = f_{ol} - f$$

et qui est donc la même fréquence de battement qu'en l'absence de milieu amplificateur, ce qui fait que rien ne se trouve changé dans la chaîne de détection du battement.

Dans une première forme de réalisation, l'indice dudit milieu solide est non-linéaire par rapport à l'amplitude du signal optique qu'il reçoit.

Dans une deuxième forme de réalisation, le coefficient d'amplification en puissance dudit milieu solide est non-linéaire par rapport à l'amplitude du signal optique qu'il reçoit.

La présente invention sera mieux comprise à la lecture de la description suivante de plusieurs formes de réalisation du dispositif de l'invention, faite en se référant aux dessins annexés, sur lesquels

- la figure 1 représente schématiquement un système de télémétrie selon l'art antérieur,
- la figure 2 représente une première forme de réalisation du dispositif de détection de l'invention,
- la figure 3 représente une deuxième forme de réalisation du dispositif de détection de l'invention, et,
- la figure 4 représente une troisième forme de réalisation du dispositif de détection de l'invention.

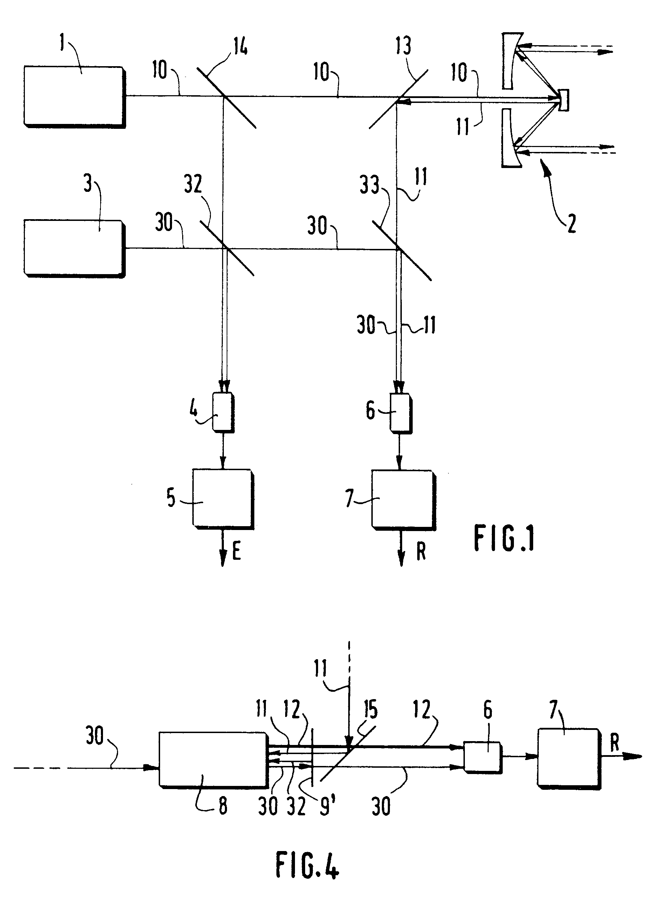

En référence à la figure 1, un système de télémétrie de type connu comprend un laser de puissance 1, ici un laser à $CO_2$ dont le faisceau est dirigé vers un système optique 2 pointé sur une cible non représentée dont la distance est à déterminer.

L'énergie lumineuse du faisceau du laser 1 se réfléchit sur la cible, et l'énergie réfléchie emprunte, en sens inverse, le même chemin. Pour déterminer la distance de la cible, et comme cela est connu, le laser 1 est commandé pour émettre un signal optique cohérent 10 de forme impulsionnelle. Le signal réfléchi 11 est alors également de forme impulsionnelle et la mesure de l'intervalle de temps qui s'écoule entre l'instant d'émission et l'instant de détection du signal optique réfléchi permet la détermination de la distance de la cible.

Afin de déterminer l'instant d'émission, une lame semi-réfléchissante 14 est disposée sur le trajet du signal optique 10 afin d'en prélever une partie pour la diriger vers un détecteur quadratique 4. Une autre lame semi-réfléchissante 32 est disposée sur le trajet d'un autre signal optique cohérent 30, engendré par un laser auxiliaire 3, afin d'en prélever une partie pour la diriger également vers le détecteur 4. Le laser 3 joue le rôle d'oscillateur local. Il s'agit ici également un laser à $CO_2$, commandé pour émettre le signal optique 30, dont la puissance est constante, mais beaucoup plus faible que celle du laser 1, et dont la fréquence est légèrement décalée par rapport à celle de celui-ci. Le décalage en fréquence du laser 3 par rapport au laser 1 vaut, par exemple, 30 Mhz. Les deux signaux optiques appliqués au détecteur quadratique 4 battent dans celui-ci et le battement, ici à 30 Mhz, est filtré, puis détecté dans un circuit électronique 5 qui délivre un signal E représentatif du signal émis, et en particulier ici, de l'instant d'émission.

Une lame semi-réfléchissante 13 est disposée sur les trajets des signaux 10 et 11 pour laisser passer le signal 10 et réfléchir le signal 11 vers un autre détecteur quadratique 6. Une autre lame semi-réfléchissante 33 laisse passer le signal 11 et réfléchit le signal 30 vers le détecteur 6. Le détecteur 6 est ici identique au détecteur 4, et il est suivi d'un circuit électronique 7, identique au circuit 4. Le détecteur 6 et le circuit 7 font donc battre le signal optique réfléchi 11 et le signal optique auxiliaire, ou local, 30 et détectent le battement entre les deux. Le signal R délivré par le circuit 7 est donc representatif du signal réfléchi 11, et en particulier ici, de l'instant de détection de ce signal 11.

Comme cela est connu, la distance maximale de la cible qui peut être déterminée à l'aide du système connu qui vient d'être décrit est liée à la sensibilité du dispositif de détection du signal réfléchi, sensibilité limitée en pratique par le bruit du laser oscillateur local 3.

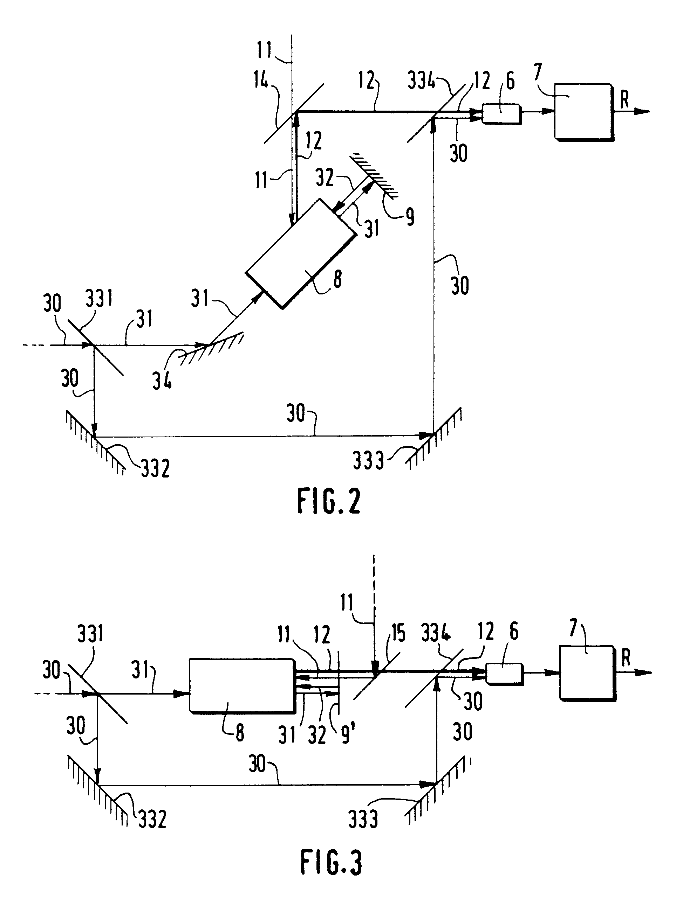

Le dispositif de détection de l'invention qui va maintenant être décrit en référence aux figures 2 à 4 permet, lorsqu'il est appliqué au système précédent, d'amplifier le signal optique 11 avant battement, de façon à augmenter la distance maximale mesurable de la cible.

Sur les figures 2 à 4 ne sont representés que les éléments du système de la figure 1 qui interviennent dans le dispositif de l'invention, et dont l'agencement se trouve modifié. Il s'agit des signaux 11 et 30, du détecteur 6, et du circuit 7. Sur ces figures, on a représenté le signal 11 après sa réflexion sur la lame semi-réfléchissante 13 de la figure 1, en le supposant alors, et par exemple, vertical. De même, le signal 30 et représenté après sa traversée de la lame semi-réfléchissante 32 de la figure 1, et il est supposé alors horizontal.

Une première forme de réalisation est représentée sur la figure 2. Un milieu solide non-linéaire 8 est pompé par deux signaux optiques 31 et 32 de directions opposées, issus du signal optique auxiliaire, ou signal local 30. Le premier de ces signaux de pompage, le signal 31, est obtenu en aval d'une lame semi-réfléchissante 331 disposée sur le trajet du signal local 30. Ce signal 31, de direction horizontale au sortir de la lame 331 est défléchi d'un angle convenable par un miroir 34 avant de pénétrer dans le milieu 8. Le deuxième signal de pompage 32 est obtenu par réflexion du premier signal de pompage 31, après sa traversée du milieu 8, sur un miroir 9 disposé perpendiculairement à sa direction.

Le milieu solide 8 est par exemple un milieu semi-conducteur du type utilisé pour la réalisation de diodes lasers. La non-linéarité qu'il présente se traduit par une non-linéarité d'indice, et par une non-linéarité d'amplification, l'une de ces deux non-linéarités étant prépondérante selon la nature du milieu considéré.

On rappelle ici qu'un milieu présente une non-linéarité d'indice si, lorsque ce milieu reçoit un signal optique, l'indice qu'il présente pour ce signal optique varie de façon non-linéaire avec l'amplitude de ce signal. On peut dire que cet indice est non-linéaire par rapport à l'amplitude du signal optique reçu.

De même, on rappelle qu'un milieu présente une non-linéarité d'amplification si, lorsque ce milieu reçoit un signal optique et en réémet un autre sous l'effet de celui qu'il reçoit, le coefficient d'amplification en puissance varie de façon non-linéaire avec l'amplitude du signal reçu. Le coefficient d'amplification en puissance est le rapport entre la puissance du signal optique réémis et celle du signal optique reçu. On peut dire alors que ce coefficient d'amplification est non-linéaire par rapport à l'amplitude du signal optique reçu.

Le milieu solide 8 reçoit également le signal 11, de direction verticale, ce qui donne naissance à un signal réémis 12, de même direction que le signal 11 mais de sens opposé, signal 12 amplifié et décalé en fréquence par rapport au signal 11. Une lame semi-réfléchissante 14 réflechit ce signal 12 vers le détecteur 6, dont l'axe de réception est ici horizontal.

La lame semi-réfléchissante 331 réflechit le signal 30, verticalement, vers un miroir 332 qui le réfléchit à son tour horizontalement vers un miroir 333. Le miroir 333 le réfléchit verticalement vers une lame semi-réfléchissante 334, lame qui le réfléchit vers le détecteur 6 en laissant passer le signal optique amplifié 12.

Comme cela a déjà été indiqué, si $f_{ol}$ est la fréquence du laser oscillateur local engendrant le signal 30 et si f est la fréquence du signal à détecter 11, la fréquence $f_a$ du signal amplifié 12 vaut :

$$f_a = 2f_{ol} - f$$

et le battement entre la fréquence $f_a$ du signal 12 et la fréquence $f_{ol}$ du signal 30 qui a lieu dans le détecteur 6 est à la fréquence $f_b$ valant :

$$f_b = f_{ol} - f$$

c'est à dire à la même fréquence que dans le système de l'art antérieur.

Dans le dispositif de la figure 2, la direction du signal optique 11 à amplifier et la direction commune des signaux de pompage 31 et 32 font un angle non nul, ce qui correspond à la disposition la plus générale. Toutefois, on peut rendre l'amplification maximale en prévoyant que ces deux directions fassent un angle nul, comme dans le dispositif de la figure 3.

Dans ce dispositif, le premier signal de pompage 31, en aval de la lame semi-réfléchissante 331, pénètre dans le milieu 8 sans avoir été défléchi, c'est à dire ici selon la direction horizontale. Après avoir traversé le milieu 8, ce premier signal de pompage 31 se réfléchit sur une lame semi-réfléchissante 9', disposée ici verticalement, et donne naissance au deuxième signal de pompage 32. La lame semi-réfléchissante 9' laisse passer le signal 11, défléchi ici horizontalement vers le milieu 8 par une lame semi-réfléchissante 15. Le signal amplifié 12, de même direction que le signal 11 à amplifier mais de sens opposé, est réémis donc horizontalement et traverse la lame semi-réfléchissante 9', la lame semi-réfléchissante 15 et la lame semi-réfléchissante 334 pour être appliqué au détecteur 6. Le reste du dispositif est identique à celui de la figure 2.

Dans le dispositif de la figure 3 les lames semi-réfléchissantes 331 et 334 et les miroirs 332 et 333, ont pour rôle d'amener le signal local 30 vers le détecteur 6.

Comme le montre le dispositif de la figure 4, les éléments précédents peuvent être supprimés si les lames semi-réfléchissantes 9' et 15 sont prévues pour qu'une partie suffisante du signal local 30 se trouve appliquée au détecteur 6. Dans ce cas, le premier signal de pompage est le signal local 30 lui-même, dont une partie traverse les lames semi-réfléchissantes 9' et 15 vers le détecteur 6, et dont l'autre partie donne naissance au deuxième signal de pompage 32. Ainsi, la structure du dispositif est particulièrement simple et compacte, puisqu'elle comprend successivement, et sur le trajet du signal local 30, le milieu solide 8, une lame semi-réfléchissante 9' disposée perpendiculairement au trajet du signal local 30, une lame semi-réfléchissante 15 pour diriger le signal 11 vers le milieu solide 8, et le détecteur 6 relié au circuit 7.

Naturellement, la portée de la présente demande n'est pas limitée à la description qui vient d'être faite. En particulier, il est à la portée de l'homme de métier de prévoir des agencements différents de ce qui ont été décrits, notamment concernant les miroirs et les lames semi-réfléchissantes.

De même, l'exemple d'application du dispositif de l'invention à un système de télémétrie n'est pas limitatif, et il est évident que le dispositif de l'invention peut s'appliquer avantageusement à toutes les situations où un signal optique de faible puissance est à détecter par détection optique cohérente, c'est à dire mettant en oeuvre une source auxiliaire jouant le rôle d'oscillateur local.

**Revendications**

1. Dispositif de détection d'un signal optique cohérent (11) comprenant des moyens (3) pour engendrer un signal optique auxiliaire (30), également cohérent, et des moyens (6, 7) pour faire battre le signal optique à détecter (11) et le signal optique auxiliaire (30) et détecter le battement, et donc le signal à détecter (11), caractérisé par le fait qu'il comprend un milieu (8) solide non-linéaire, pompé par deux signaux optiques (31, 32; 30, 32) de directions opposées et issus du signal optique auxiliaire (30), et qui reçoit le signal optique à détecter (11) pour l'amplifier avant battement.

2. Dispositif selon la revendication 1, dans lequel le coefficient d'amplification en puissance dudit milieu (8) solide est non-linéaire par rapport à l'amplitude du signal optique qu'il reçoit.

3. Dispositif selon la revendication 1, dans lequel l'indice dudit milieu (8) solide est non-linéaire par rapport à l'amplitude du signal optique qu'il reçoit.

4. Dispositif selon l'une des revendications 1 à 3, comprenant successivement, sur le trajet du signal optique auxiliaire (30),le milieu solide non-linéaire (8), une lame semi-réfléchissante (9') disposée perpendiculairement au trajet du signal optique auxiliaire (30), une lame semi-réfléchissante (15) pour diriger le signal optique à détecter (11) vers ledit milieu (8), et lesdits moyens (6, 7) de battement et de détection.

**Claims**

1. Device for detecting a coherent optical signal (11) comprising means (3) for generating an auxiliary optical signal (30), also coherent, and means (6,7) for having the optical signal (11) to be detected and the auxiliary optical signal beat and detecting the beat, and thus the signal (11) to be detected, characterized by the fact that it comprises a non-linear solid medium (8), pumped by two optical signals (31,32;30,32) of opposite directions and issued from the auxiliary optical signal (30), and which receives the optical signal (11) to be detected to amplify it before beat.

2. Device according to claim 1, wherein the power amplification coefficient of said solid medium (8) is non-linear with respect to the amplitude of the optical signal it receives.

3. Device according to claim 1, wherein the index of said solid medium (8) is non-linear with respect to the amplitude of the optical signal it receives.

4. Device according to one of claims 1 to 3, comprising, in series, along the path of the auxiliary optical signal (30), the non-linear solid medium (8), a semi-reflecting plate (9) disposed perpendicularly to the path of the auxiliary optical signal (30), a semi-reflecting plate (15) to conduct the optical signal (11) to be detected to said medium (8), and said beat and detecting means (6,7).

**Patentansprüche**

1. Vorrichtung zur Erfassung eines kohärenten optischen Signals (11), umfassend Mittel (3) zur Erzeugung eines optischen Hilfssignals (30), das ebenfalls kohärent ist, und Mittel (6, 7), um das zu erfassende optische Signal (11) und das optische Hilfssignal (30) zu überlagern und die Überlagerung und folglich das zu erfassende Signal (11) zu erfassen, dadurch gekennzeichnet, daß sie ein nichtlineares festes Medium (8) enthält, welches durch zwei vom optischen Hilfssignal (30) abstammende optische Signale (31, 32; 30, 32) von entgegengesetzter Richtung gepumpt wird und welches das zu erfassende optische Signal (11) empfängt, um es vor der Überlagerung zu verstärken.

2. Vorrichtung nach Anspruch 1, bei welcher der Leistungsverstärkungsfaktor des festen Mediums (8) in bezug auf die Amplitude des optischen Signals, das dieses empfängt, nichtlinear ist.

3. Vorrichtung nach Anspruch 1, bei welcher der Index des festen Mediums (8) in bezug auf die Amplitude des optischen Signals, das dieses empfängt, nichtlinear ist.

4. Vorrichtung nach einem der Ansprüche 1 bis 3, die auf dem Weg des optischen Hilfssignals (30) nacheinander umfaßt: das nichtlineare feste Medium (8), eine halbdurchlässige Platte (9'), die senkrecht zum Weg des optischen Hilfssignals (39) angeordnet ist, eine halbdurchlässige Platte (15), um das zu erfassende optische Signal (11) zum Medium (8) zu lenken, und die Mittel (7, 8) zur Überlagerung und Erfassung.

FIG.1

FIG.4

FIG.2

FIG.3